## Europäisches Patentamt

## European Patent Office

## Office européen des brevets

(19)

(11) Veröffentlichungsnummer: **0 103 144**
**A2**

(12) # EUROPÄISCHE PATENTANMELDUNG

(21) Anmeldenummer: **83107691.4**

(22) Anmeldetag: **04.08.83**

(51) Int. Cl.³: **C 01 B 13/10, B 01 D 53/02**

(30) Priorität: **20.08.82 DE 3230922**

(43) Veröffentlichungstag der Anmeldung: **21.03.84**
**Patentblatt 84/12**

(84) Benannte Vertragsstaaten: **AT BE CH FR IT LI NL**

(71) Anmelder: **MESSER GRIESHEIM GMBH, Hanauer Landstrasse 330, D-6000 Frankfurt/Main 1 (DE)**

(72) Erfinder: **Frieges, Michael, Windscheidstrasse 23, D-4000 Düsseldorf (DE)**
Erfinder: **Gietmann, Arnold, Sanddornweg 62, D-4150 Krefeld (DE)**
Erfinder: **Leitzke, Ortwin, Dr., Nikolausstrasse 17, D-4044 Kaarst 2 (DE)**
Erfinder: **Wolf, Ewald, Martin-Luther-Strasse 3, D-6367 Karben 1 (DE)**

(54) **Verfahren zur Gewinnung von Ozon.**

(57) Ozon ist ein starkes Oxidationsmittel mit einem weiten Anwendungsfeld in der Wasseraufbereitung und in der Chemie allgemein. Ozon wird hergestellt in Ozonerzeugern durch stille elektrische Entladung. Als Ausgangsgas dient Luft oder Sauerstoff. Da in den Ozonerzeugern nur ein geringer Teil des eingesetzten Sauerstoffs zu Ozon umgewandelt wird, ist es bei der Ozongewinnung aus Sauerstoff aus Kostengründen unerläßlich, den nicht zu Ozon umgewandelten Sauerstoff zurückzugewinnen und dem Ozonerzeuger erneut zuzuleiten. Dies kann in Adorptionsanlagen mit Silicagel erreicht werden. In einer Adsorptionsphase wird das Ozon unter erhöhtem Druck adsorbiert, während der Sauerstoff ungehindert zum Ozonerzeuger zurückströmt. In einer Desorptionsphase wird das Ozon aus der Adorptionsanlage unter etwas verringertem Druck abgezogen. Um kontinuierlich arbeiten zu können, arbeitet man mit umschaltbaren Adsorptionsgefäßen. Das Verfahren wird auch bei der Ozongewinnung aus Luft angewendet, indem eine zusätzliche adsorptive Stickstoff-Sauerstoff-Trennung vorgenommen wird.

Die Desorption wird mit Hilfe eines Trägergases durchgeführt. Dieses verdünnt das abgezogene Ozon und kann die Adsorptionsmasse verunreinigen. Wegen der Ozonverdünnung wird mehr Flüssigkeit zur vollständigen Ozonlösung benötigt als an sich erforderlich.

Zwecks Vermeidung einer unnötigen Ozonverdünnung und Verunreinigung der Adsorptionsmasse wird die Desorption bei unteratmosphärischen Drücken unter Mitwirkung einer Unterdruck erzeugenden Maschine und eines strömenden Mediums vorgenommen.

Vorzugsweise ist die Maschine ein Injektor (10), der vom strömenden Medium durchströmt wird und das Ozon ansaugt, welches mit dem strömenden Medium vermischt und gegebenenfalls in ihm gelöst wird. Es läßt sich ein jeweils optimales Verhältnis von Ozon und strömendem Medium einstellen. Wenn das strömende Medium ein Gas ist, können auch beliebige andere Unterdruck erzeugende Maschinen verwendet werden, indem am Eingang der Maschine die Leitungen für Ozon und für Gas zusammengeführt werden.

- 1 -

MESSER GRIESHEIM GMBH                    MG  1404

Kennwort: Sorbozon                       EM  1062

Erfinder: M.Frieges                      Ordner:  A
          A.Gietmann
          Dr.O.Leitzke
          E.Wolf

## Verfahren zur Behandlung von Stoffen mit Ozon

Die Erfindung betrifft ein Verfahren zur Behandlung von Stoffen mit Ozon, bei dem das Ozon aus Sauerstoff in einem Ozonerzeuger gewonnen und in einer Adsorptionsanlage vom Sauerstoff abgetrennt wird.

Ozon ist ein sehr starkes und vorzügliches Oxidationsmittel für organische Substanzen und auch für anorganische Verbindungen, die Elemente mit mehreren Oxidationsstufen enthalten. Schon seit langem wird Ozon zur Wasserbehandlung eingesetzt, weil das Ozon die unerwünschten Wasserinhaltsstoffe durch Oxidation entgiftet oder besser biologisch abbaubar macht, oder auch die Wasserinhaltsstoffe leichter ausflockbar, sedimentierbar oder filtrierbar macht. Ozon ist auch ein Reaktionsmittel für viele Chemikalien, z.B. zur Erzeugung von Aldehyden oder Säueren.

Die Fasern von Zellstoffen werden durch Reaktion mit Ozon verändert oder gebleicht. Ferner wird Ozon zur Reaktion mit Kunststoffen verwendet, z.B. in Form von Schäumen, Granulat, Folien oder gepreßten oder gezogenen Platten. Durch die Reaktion mit Ozon werden die Oberflächen verändert z.B. hinsichtlich der Verbesserung der Haftung mit anderen Kunststoffen oder Farben.

Ozon für großtechnische Anwendungen wird in Ozonerzeugern durch stille elektrische Entladungen aus Luft oder reinem Sauerstoff gewonnen. Dabei wird nur ein geringer Teil des dem Ozonerzeuger zugeführten Sauerstoffs in Ozon umgewandelt. Bei Verwendung von reinem Sauerstoff als Ausgangsgas ist die prozentuale gewonnene Ozonmenge allerdings erheblich größer als bei der Verwendung von Luft als Ausgangsgas. Dieser Vorteil wird aber durch die Kosten für den reinen Sauerstoff weitgehend wieder zunichte gemacht. Die Ozonerzeugung aus reinem Sauerstoff ist daher nur dann wirtschaftlich, wenn der nichtumgesetzte Sauerstoff vom Ozon abgetrennt und dem Ozonerzeuger wieder zugeführt wird.

Die Sauerstoffabtrennung und Rückgewinnung kann auf verschiedene Weisen erfolgen. Aus der deutschen Patentschrift 2 827 151 ist beispielsweise ein Verfahren zur Wasserbehandlung mit Ozon bekannt, bei dem das Ozon-Sauerstoff-Gemisch in das Wasser eingetragen und der nicht gelöste Sauerstoff abgetrennt wird. Der abgetrennte Sauerstoff muß von der störenden Feuchtigkeit und in vielen Fällen noch von anderen Substanzen, beispielsweise Kohlendioxid und Stickstoff, die aus dem Wasser entgasen befreit werden. Erst nach einer solchen Reinigung kann der Sauerstoff in den Ozonerzeuger zurückgeführt werden. Durch diese Reinigung entstehen zusätzliche Kosten.

Die Kosten für die Reinigung des in den Ozonerzeuger zurückzuleitenden Sauerstoffs lassen sich vermeiden, wenn man die Trennung des Ozons vom Sauerstoff unmittelbar nach dem Ozonerzeuger durchführt und das abgetrennte Ozon mit einem Trägergas der Stoffbehandlung zuführt. Die Trennung wird in Adsorptionsgefäßen, die mit Silicagel als Adsorptionsmaterial gefüllt sind, durchgeführt. Bei etwas erhöhtem Druck, der in etwa dem Arbeitsdruck des Ozonerzeugers entspricht, wird das Ozon vollständig adsorbiert, während der Sauerstoff den Adsorber ungehindert passiert und zum Ozonerzeuger zurückströmt. Anschließend wird das Ozon bei etwas erniedrigtem Druck mit Hilfe eines Desorptionsgases, beispielsweise Luft oder Stickstoff, desorbiert. Um kontinuierlich arbeiten zu können, verwendet man mehrere abwechselnd betriebene Adsorptionsgefäße. Bei dieser Verfahrensweise erzeugt man das Ozon aus Luft, indem man eine zusätzliche adsorptive Trennung des Luftstickstoffs vom Sauerstoff in die Adsorptionsanlage integriert. Derartige Verfahren sind bekannt geworden aus "Linde-Berichte aus Technik und Wissenschaft", Jahrgang 49, 1981, Seiten 9-13, Laßmann und Benkmann,"Wirtschaftliche Ozonerzeugung aus Sauerstoff durch die Linde-Druckwechseladsorptionsanlage" und"Brown Boveri-Mitteilungen", Heft 10/11, 1981, Seiten 411-415, Gaia und Menth, "Neue Hochleistungs-Ozonerzeuger und ihre Anwendung in der Industrie".Nachteilig ist bei diesen Verfahren, zumindest bei manchen Anwendungsfällen die Verdünnung des Ozons durch das Desorptionsgas. Zur vollständigen Lösung des Ozons in einer Flüssigkeit ist wegen seiner starken Verdünnung mehr Flüssigkeit erforderlich, als dies der Fall wäre, wenn man das Ozon in hochkonzentrierter Form in die Flüssigkeit einleiten könnte.

Schließlich besteht noch die Möglichkeit, das Ozon an gekühltem Silicagel zu adsorbieren und in reiner Form oder vermischt mit einem Desorptionsgas zu desorbieren.

Derartige Verfahren sind beschrieben worden durch
S.Nakayama et al. in "Ozone: Science and Engineering",
Vol.2, 1980, Seiten 327 - 336, Pergamon Press Ltd., USA
sowie durch G.A.Cook et al. in "Separation of Ozone
from Oxygen by a Sorption Process", Ozone Chemistry
and Technology, Washington 1959, Seiten 44 - 52. Die
Kosten für die Kühlung des Silicagels mit einem eigenen
Kühlkreislauf sind nachteilig für dieses Verfahren.

Der Erfindung liegt die Aufgabe zugrunde, ein Verfahren
zur Erzeugung von Ozon aus Sauerstoff unter Verwendung
einer Adsorptionsanlage zu schaffen, welches es bei grosser Wirtschaftlichkeit, Sicherheit und Unkompliziertheit
gestattet, das Ozon in beliebiger Konzentration, d.h. vor
allem auch hochkonzentriert, der Stoffbehandlung zuzuführen.

Ausgehend von dem im Oberbegriff des Anspruches 1 berücksichtigten Stand der Technik ist diese Aufgabe erfindungsgemäß gelöst mit den im kennzeichnenden Teil des Anspruches
1 angegebenen Merkmalen. Vorteilhafte Weiterbildungen der
Erfindung sind in den Unteransprüchen angegeben.

Der Erfindungsgedanke besteht also darin, das Ozon zunächst
in hochkonzentrierter Form allein durch Unterdruck aus der
Adsorptionsanlage zu desorbieren und dann erst mit einem
flüssigen oder gasförmigen Medium zu vermischen bzw. zu
lösen. Das flüssige oder gasförmige Medium dient gleichzeitig in Verbindung mit einer Unterdruck erzeugenden
Maschine dazu, den unteratmosphärischen Desorptionsdruck
zu erzeugen. Durch entsprechende Auswahl der Strömungsgeschwindigkeit oder des Maschinentyps kann sowohl der erzeugte Unterdruck als auch die Menge des strömenden Mediums
in weiten Grenzen variiert werden, so daß sich leicht eine
gewünschte Ozonkonzentration einstellen läßt.

Als Unterdruck erzeugende Maschine wird ein vom strömenden Medium durchströmter Injektor bevorzugt, da dieser keine beweglichen Teile besitzt und daher leicht gegenüber Ozon verschleißfest gestaltet werden kann. Es lassen sich aber auch andere Maschinen, beispielsweise Ventilatoren, Membranpumpen, Wasserringkompressoren oder Metallmembrankompressoren einsetzen, die gleichzeitig ein gasförmiges Medium und das desorbierte Ozon ansaugen. Die gewünschte vollständige Desorption des Ozons bei Unterdruck und Raumtemperatur läßt sich vor allem dann leicht und sicher erreichen, wenn das Volumen des Adsorptionsgefäßes und der Rohrleitung zwischen dem Adsorptionsgefäß und der Unterdruck erzeugenden Maschine so ausgelegt ist, daß während der Desorptionsphase die Ozonkonzentration in diesem Volumen $160g/m^3$ nicht überschreitet.

Vier Ausführungsbeispiele der Erfindung sollen anhand der beigefügten Zeichnungen erläutert werden.

Es zeigen:

Fig.1    ein Verfahrensschema, bei dem der Unterdruck durch einen Injektor und ein flüssiges Medium erzeugt wird,

Fig.2    ein Verfahrensschema, bei dem der Unterdruck durch einen Injektor und ein gasförmiges Medium erzeugt wird,

Fig.3    ein Verfahrensschema, bei dem der Unterdruck durch eine Membranpumpe erzeugt wird, die gleichzeitig ein gasförmiges Medium und das desorbierte Ozon ansaugt,

Fig.4   ein Verfahrensschema, bei dem
der Unterdruck durch ein im
Kreislauf umgepumptes flüssiges Medium in einem Injektor
erzeugt wird.

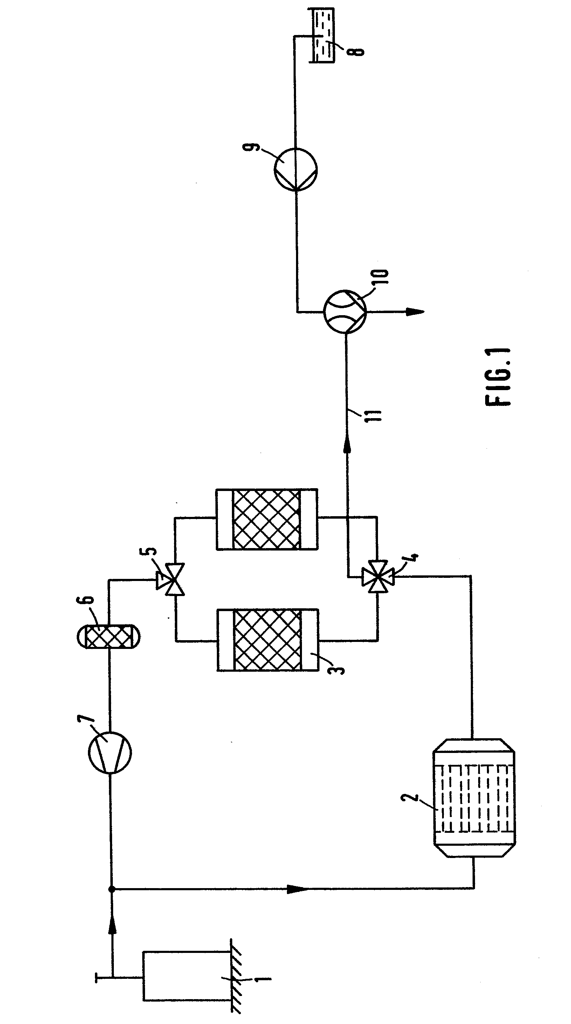

Bei dem in Fig.1 dargestellten Ausführungsbeispiel wird der Sauerstoff aus einer Sauerstoff-Versorgungsstation 1 entnommen und unter einem Druck von etwa 1,2 bar dem Ozonerzeuger 2, an welchem eine Hochspannung anliegt, zugeführt. Das im Ozonerzeuger 2 gebildete Ozon-Sauerstoff-Gemisch wird zur Adsorptionsanlage 3 geführt, die aus mindestens einem Behälter zur Ozonadsorption und mindestens einem Behälter zur Ozondesorption besteht, die wechselweise geschaltet werden. Die Umschaltung erfolgt mit den Schaltventilen 4 und 5. Die Adsorptionsbehälter sind mit Silicagel gefüllt. Vorzugsweise handelt es sich dabei um reines Silicagelgranulat mit sehr wenig Eisenanteilen und einer spezifischen Oberfläche von 750 m²/g. Es wird eine Ozonbeladungskapazität von 1g Ozon auf ein Adsorberschüttgewicht von 600 - 1400g, vorzugsweise 800 - 1000g, genutzt. Die Verweilzeit des ozonhaltigen Gases im Ozonadsorber beträgt 14 - 72 sec. Die Gesamtzeit für die Be- und Entladung des Ozons kann bis zu 5 Min. betragen. Selbstverständlich muß der für die Ozongewinnung verwendete Sauerstoff rein sein, d.h. es dürfen in ihm nicht Fremdsubstanzen wie Wasser, Zusatzluft oder Öl enthalten sein.

Der nicht adsorbierte Sauerstoff verläßt die Adsorptionsanlage 3 über das Umschaltventil 5, die Überwachungsanlage 6 und das Umwälzgebläse 7. Danach strömt er erneut in den Ozonerzeuger 2. Das Umwälzgebläse 7 dient zum Ausgleich der Druckverluste im Sauerstoff-Ozon-Kreislauf. Die Überwachungsanlage 6 besteht aus einem Behälter, der mit Metallmischoxiden gefüllt ist, an denen Ozon katalytisch

0103144

- 7 -

unter Wärmeerzeugung zerfällt. Eine etwaige Temperaturerhöhung in der Überwachungsanlage 6 wird mit einem Temperaturfühler überwacht. Ist beispielsweise die Adsorptionsanlage 3 erschöpft oder falsch geschaltet, so steigt die
Temperatur in der Überwachungsanlage 6 an, weil das Ozon
nicht mehr in ausreichendem Maße adsorbiert wird. Überschreitet die Temperatur einen festgelegten maximalen
Grenzwert, so wird die Stromversorgung für den Ozonerzeuger 2 unterbrochen und dadurch die Ozonproduktion beendet.

Während der eine Behälter der Adsorptionsanlage 3 mit
Ozon beladen wird, wird der andere entladen. Dies geschieht erfindungsgemäß immer so, daß beim Desorptionsvorgang das Ozon zwar mit einem anderen Gas oder einer
anderen Flüssigkeit vermischt wird, ohne daß jedoch diese
anderen Medien mit dem Adsorbermaterial in Berührung kommen. Bei dem Ausführungsbeispiel nach Fig.1 ist dieses
zusätzliche Medium Wasser, welches aus dem Wasserbehälter
8 mit der Pumpe 9 durch den Injektor 10 gepumpt wird. Der
Gasanschluß des Injektors 10 ist durch die Leitung 11 an
das Schaltventil 4 und damit an die Adsorptionsanlage 3
angeschlossen. Durch das strömende Wasser wird im Injektor
10 ein Unterdruck an dessen Gasseite erzeugt, mit dessen
Hilfe das Ozon vom Silicagel desorbiert wird. Im Injektor
10 wird das desorbierte Ozon mit dem Wasser vermischt und in
ihm gelöst. Die Menge des strömenden Wassers, sein Druck
und die Größe des Injektors 10 sind in weiten Grenzen
variabel, so daß eine optimale Anpassung der Menge des
strömenden Wassers an die desorbierte Ozonmenge möglich
ist. Es kann z.B. erreicht werden, daß die Wassermenge
gerade zu einer vollständigen Lösung des Ozons ausreicht.
Das Ozon-Wassergemisch aus dem Injektor 10 wird anschliessend der Stoffbehandlung, in diesem Fall einer Wasseraufbereitung, zugeführt.

- 8 -

Wenn das durch den Injektor 10 gepumpte Wasser der Gesamtmenge des in der Zeiteinheit aufzubereiten Wassers entspricht, beginnt die Stoffbehandlung unmittelbar nach Verlassen des Injektors 10. In der Regel wird aber durch den
Injektor 10 nur ein Teilstrom des zu behandelnden Wassers
gepumpt und dieser mit Ozon beladene Teilstrom wird der
eigentlichen Ozonbehandlungsanlage zugeführt. Die beabsichtigte Stoffbehandlung kann auch ohne weiteres unter
erhöhtem Druck durchgeführt werden, indem das Gemisch aus
Ozon und dem strömenden Medium auf den erforderlichen
Druck komprimiert wird. Es ist somit nicht erforderlich,
das Ozon allein zu verdichten.

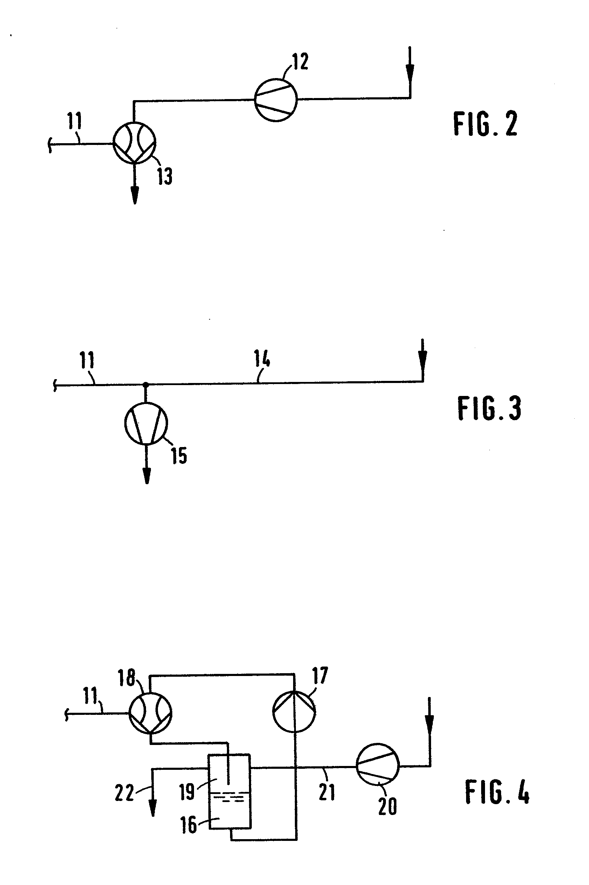

Die Fig. 2 - 4 zeigen weitere Ausführungsmöglichkeiten des
erfindungsgemäßen Verfahrens. Die Ozonerzeugung entspricht
dabei der in Fig.1 dargestellten, sie ist daher in den
Fig. 2 - 4 weggelassen worden.

Das Verfahren gemäß Fig.2 unterscheidet sich von dem Verfahren nach Fig.1 lediglich darin, daß anstelle von Wasser
Luft als strömendes Medium verwendet wird. Die Luft wird
im Verdichter 12 komprimiert und durch den Injektor 13 geschickt. Dadurch wird im Injektor 13 ein Unterdruck erzeugt,
durch welchen über die Leitung 11 das Ozon desorbiert wird.
Wiederum kann das Ozon-Luft-Verhältnis in weiten Grenzen
beliebig eingestellt werden und das Ozon-Luft-Gemisch kann
auf den gewünschten Behandlungsdruck verdichtet werden.

Injektoren sind für das erfindungsgemäße Verfahren zwar besonders vorteilhaft, da sie ohne Schwierigkeiten korrosionsfest gegen das aggressive Ozon gemacht werden können.
Das erfindungsgemäße Verfahren läßt sich aber auch mit anderen Unterdruck erzeugenden Maschinen durchführen. Eine
solche Möglichkeit zeigt Fig.3, bei der das strömende
Medium wiederum Luft ist, die durch die Leitung 14 mittels einer Membranpumpe 15 angesaugt wird. Ebenfalls an den Eingang der Membranpumpe 15 angeschlossen ist die Leitung 11 aus der Adsorptionsanlage 3. Die angesaugten Gase werden vermischt und der Stoffbehandlung zugeführt.

Fig.4 zeigt eine Verfahrensweise, bei der das Ozon mittels eines flüssigen strömenden Mediums aus der Desorptionsanlage 3 abgezogen wird, der der Stoffbehandlung zugeführte Gasstrom jedoch gasförmig ist. Hierzu wird Wasser aus dem Behälter 16 mittels der Pumpe 17 durch den Injektor 18 geschickt. Infolge des im Injektor 18 erzeugten Unterdruckkes wird Ozon desorbiert, gelangt durch die Leitung 11 in den Injektor 18 und wird mit dem Wasser vermischt. Das Flüssigkeitsvolumen wird so klein gewählt, daß das meiste Ozon nicht gelöst, sondern nur vom Wasser mitgerissen wird. Das Ozon-Wasser-Gemisch wird zurück in den geschlossenen Behälter 16 geleitet, wo das Ozon aus dem Wasser entgast. Es sammelt sich im Gasraum 19 des Behälters 16 und wird durch Luft, die durch den Verdichter 20 auf den erforderlichen Druck komprimiert wird, vermischt. Die komprimierte Luft tritt durch die Leitung 21 in den Gasraum 19 des Behälters 16 ein, das Ozon-Luft-Gemisch verläßt den Gasraum 19 über die Leitung 22.

Das erfindungsgemäße Verfahren nutzt die Vorteile, die die Ozonerzeugung aus Sauerstoff bietet, voll aus. Gegenüber der Ozonerzeugung aus Luft ist keine aufwendige Gasaufbereitung, d.h. die Befreiung von Feuchtigkeit, Öl und Staub, nötig. Ozon kann in hoher Gaskonzentration mit der Hälfte der elektrischen Energie erzeugt werden, die bei der Erzeugung aus Luft nötig ist.

- 10 -

Das Ozon wird vollständig ohne Abgasabgabe an die Umwelt in Lösung gebracht. Der nicht zu Ozon umgesetzte Sauerstoff nimmt an der Stoffbehandlung nicht teil, er kann daher ohne weiteres, insbesondere ohne erneute Aufbereitung, in den Ozonerzeuger zurückgeführt werden.

Ein besonderer Vorteil des erfindungsgemäßen Verfahrens besteht darin, daß das Gasvolumen, welches im wesentlichen aus Ozon und kleinen Sauerstoffresten, die aus der Umschaltung der Adsorptionsanlage herrühren, besteht und zur Reaktion angeboten wird, kleiner ist als bei bekannten Verfahren, bei denen das Ozon mit Desorptionsgas vermischt ist. Dies bedeutet, zur kompletten Lösung des Ozons in einer Flüssigkeit ist bei dem erfindungsgemäßen Verfahren weniger Flüssigkeit notwendig, bzw. wird bei gleichbleibendem Flüssigkeitsvolumen das Ozon vollständiger gelöst.

Da die Desorption ausschließlich durch Unterdruck bewerkstelligt wird, kann das Silicalgel auch nicht durch ein Desorptionsgas verunreinigt werden. Das desorbierte Ozon ist praktisch unverdünnt. Die Sauerstoffverluste sind überaus gering. Es muß zur Ozonerzeugung nur soviel Frischsauerstoff in den Kreislauf eingeführt werden, wie Sauerstoff in Ozon umgewandelt und wie Sauerstoff durch die Umschaltung verloren geht. Für die Produktion von 1 kg Ozon wird daher nur ca. 1 m³ Sauerstoff benötigt.

Ba/Hi

Patentansprüche

1. Verfahren zur Behandlung von Stoffen mit Ozon, bei dem das Ozon aus Sauerstoff in einem Ozonerzeuger (2) gewonnen, bei niedrigen Drücken und Umgebungstemperaturen während einer Adsorptionsphase in einer Adsorptionslage (3) vom nicht zu Ozon umgewandelten Sauerstoff getrennt und der nicht umgewandelte Sauerstoff zum Ozonerzeuger zurückgeführt wird, wonach in einer Desorptions-phase das adsorbierte Ozon bei einem geringeren Druck als dem Beladungsdruck aus der Adsorptionsanlage abgezogen wird,
dadurch gekennzeichnet,
daß die Desorption bei unteratmosphärischen Drücken unter Mitwirkung einer Unterdruck erzeugenden Maschine (10, 13, 15, 18) und eines strömenden Mediums stattfindet, mit welchem das desorbierte Ozon vermischt wird, wonach die Mischung oder das aus der Mischung abgetrennte Ozon der Stoffbehandlung zugeführt wird.

2. Verfahren nach Anspruch 1,
dadurch gekennzeichnet,
daß der unteratmosphärische Druck mittels eines Injektors (10,13,18) durch das strömende Medium erzeugt wird.

3. Verfahren nach Anspruch 1,
bei dem das strömende Medium gasförmig ist,
dadurch gekennzeichnet,
daß das strömende Medium und das desorbierte Ozon kurz vor dem Eingang einer Maschine (15) zur Erzeugung von Gasunterdruck vereinigt werden.

4. Verfahren nach Anspruch 2,
bei dem das strömende Medium flüssig ist,
dadurch gekennzeichnet, daß das Medium aus einem geschlossenen Behälter (16) im Kreislauf durch den Injektor (18) gepumpt wird, und sich im Injektor mit dem desorbierten Ozon vermischt, wonach das Ozon im geschlossenen Behälter aus dem flüssigen Medium in den Gasraum (19) des geschlossenen Behälters entweicht, dort mit einem gasförmigen Medium vermischt und zur Stoffbehandlung abgezogen wird.

5. Verfahren nach den Ansprüchen 1 bis 4,
dadurch gekennzeichnet,
daß die Desorption bei Drücken von 0,1 bis 0,9 bar stattfindet.

6. Verfahren nach den Ansprüchen 1 bis 5,
dadurch gekennzeichnet,
daß das gasförmige Medium Luft und das flüssige Medium Wasser ist.

7. Verfahren nach den Ansprüchen 1 bis 6,
dadurch gekennzeichnet,
daß als Adsorptionsmaterial Silicagelgranulat mit sehr wenig Eisenanteilen und einer spezifischen Oberfläche von 750 m²/g dient.

8. Vorrichtung zur Durchführung des Verfahrens nach Anspruch 2, bestehend aus einem Ozonerzeuger (2) mit Sauerstoffversorgung (1), einer aus zwei Adsorbergefäßen bestehenden Adsorptionsanlage (3), in welcher abwechselnd Ozon adsorbiert und desorbiert wird, einem Umwälzgebläse (7) mit Rückführleitung zur Zurückführung des nicht zu Ozon umgewandelten Sauerstoffs in den Ozonerzeuger, sowie Umschalteinrichtungen (4,5) zum wechselweisen Betrieb der Adsorptionsgefäße, gekennzeichnet durch einen Unterdruck erzeugenden Injektor (10,13), dessen Unterdruckanschluß mit der eingangsseitigen Umschalteinrichtung (4) der Adsorptionsanlage verbunden ist.

9. Vorrichtung nach Anspruch 8 zur Durchführung des Verfahrens nach Anspruch 4, gekennzeichnet durch einen teilweise mit Flüssigkeit gefüllten geschlossenen Behälter (16), dessen Gasraum (19) mit dem Ausgang des Injektors (18) verbunden ist und dessen Flüssigraum über eine Pumpe (17) mit dem Eingang des Injektors verbunden ist, sowie Anschlüsse am Gasraum des Behälters zum Durchleiten eines gasförmigen Mediums.

10. Vorrichtung zur Durchführung des Verfahrens nach Anspruch 3, bestehend aus einem Ozonerzeuger (2) mit Sauerstoffversorgung (1), einer aus zwei Adsorbergefäßen bestehenden Adsorptionsanlage (3), in welcher abwechselnd Ozon adsorbiert und desorbiert wird, einem Umwälzgebläse (7) mit Rückführleitung zur Zurückführung des nicht zu Ozon umgewandelten Sauerstoffs in den Ozonerzeuger, sowie Umschalteinrichtungen (4,5) zum wechselweisen Betrieb der Adsorptionsgefäße, gekennzeichnet durch eine Maschine (15) zur Erzeugung von Gasunterdruck, deren Eingang einerseits mit der eingangsseitigen Umschalteinrichtung (4) der Adsorptionsanlage verbunden ist, andererseits mit der Zuführleitung (14) eines gasförmigen Mediums verbunden ist.

11. Vorrichtung nach den Ansprüchen 8 bis 10, dadurch gekennzeichnet, daß das Volumen der Adsorptionsgefäße und der Rohrleitungen zwischen den Adsorptionsgefäßen und den Unterdruck erzeugenden Maschinen so ausgelegt ist, daß

0103144

- 4 -

während der Desorptionsphase die Ozonkonzentration im zur Verfügung stehenden freien Raum 160 g/m³ nicht überschreiten kann.

Ba/Hi
EM 1062
MG 1404

FIG.1

FIG. 2

FIG. 3

FIG. 4